# EUROPEAN PATENT SPECIFICATION

(11) **EP 2 136 506 B1**
(45) Date of publication and mention of the grant of the patent: **05.12.2012**
(21) Application number: 07846240.5
(22) Date of filing: 29.12.2007
(51) Int. Cl.: H04L 12/26, H04L 12/28, H04L 12/14

(54) **KEEPALIVE MONITORING METHOD, SYSTEM AND APPARATUS OF A SUBSCRIBER SESSION GROUP**
VERFAHREN, SYSTEM UND VORRICHTUNG ZUR ÜBERWACHUNG DER AUFRECHTERHALTUNG EINER GRUPPE TEILNEHMERSITZUNGEN
PROCÉDÉ, SYSTÈME ET APPAREIL DE SURVEILLANCE DE PERMANENCE DE LIAISON D'UN GROUPE DE SESSIONS D'ABONNÉ

(30) Priority: 11.05.2007 CN 200710108303
(43) Date of publication of application: 23.12.2009
(73) Proprietor: Huawei Technologies Co., Ltd., Longgang District, Shenzhen Guangdong 518129 (CN)
(72) Inventor: ZHENG, Ruobin c/o Huawei Technologies Co.Ltd., Longgang District 518129, Shenzhen (CN); LI, Hongyu c/o Huawei Technologies Co.Ltd, Longgang District 518129, Zhenzhen (CN)
(74) Representative: Kreuz, Georg Maria
(86) International application number: PCT/CN2007/071414
(87) International publication number: WO 2008/138198

(56) References cited:
- CN-A- 1 753 540
- CN-A- 1 930 821
- US-A- 5 781 726
- US-A1- 2007 076 607
- US-A1- 2007 076 607
- OOGHE ALCATEL N VOIGT SIEMENS M PLATNIC ECI T HAAG T-SYSTEMS S: "Framework and Requirements for a Layer 2 Control Protocol (L2CP) in Broadband Multi-Service Networks; draft-ooghe-l2cp-framework-00.txt" IETF STANDARD-WORKING-DRAFT, INTERNET ENGINEERING TASK FORCE, IETF, CH, 1 January 2006 (2006-01-01), XP015044483 ISSN: 0000-0004

## Description

### FIELD OF THE INVENTION

The present invention relates to the field of communication, and more particularly to a method, system and device for performing keep-alive monitoring on subscriber sessions.

### BACKGROUND OF THE INVENTION

In order to enable an access network to support new services, devices of the access network need to be provided with an additional control function, and a support device needs to be operated to control all the devices accessing the access network.

In the access network, an Internet Protocol (IP) session represents a network access session associated with an IP address of a subscriber or user.

The IP session and a Point-to-Point Protocol (PPP) session are peer-to-peer. The IP session and the PPP session are collectively referred to as a subscriber session. The subscriber session is generally terminated at an IP edge device, that is, the subscriber session is a session established between a user equipment (UE) and an IP edge device. The IP edge device can be illustrated by taking a broadband network gateway (BNG) or a broadband remote access server (BRAS) as an example. An IP address of a subscriber or user is an essential part in identifying parameters of the subscriber session and in the authentication process. The IP address is generally managed and maintained by a Dynamic Host Control Protocol (DHCP) server, that is, the IP address requesting the subscriber session is applied to the DHCP server. The subscriber session is used to manage the user's access to a network, such as charging and status.

The existing subscriber session mechanism such as session keep-alive monitoring is performed based on each session. Typically, each BNG/BRAS supports 5,000 access nodes (ANs), each AN supports 1,000 digital subscriber lines (DSLs), and each DSL supports one PPP session and three IP sessions, so that each BNG/BRAS supports 20,000,000 subscriber sessions. Assuming that a keep-alive monitoring period based on each subscriber session is one minute, each BNG/BRAS sends 20,000,000 subscriber session keep-alive monitoring messages per minute.

As such, the BNG/BRAS needs to process a high volume of traffic when performing keep-alive monitoring on each subscriber session, resulting in a high volume of keep-alive monitoring traffic in the access network. In addition, the real-time processing load of the BNG/BRAS is increased, and the processing delay is prolonged.

US 5 781 726 A describes a method for managing the traffic involved in maintaining a set of connection oriented sessions between end stations in a network. Particularly, a method is based on selecting a member of a first edge device. Request polling traffic of the selected polling session is forwarded from the first edge device to the second edge device. All other polling traffic from other blocked at the first edge device.

"Framework and Requirements for a Layer 2 Control Protocol (L2CP) inBroadband Multi-Service Networks; draft-ooghe-12cp-framework-00.txt" describes a framework for a Layer 2 Control Protocol (L2CP) mechanism between a service-oriented layer 3 edge device (e.g. a BRAS) and a layer 2 Access Node (e.g. a DSLAM) in a multi-service architecture. The Layer 2 control mechanism ensure the transmission of the information does not needs to go through distinct element managers, but rather using a direct device-device communication.

### SUMMARY OF THE INVENTION

The present invention provides a method, system and device as claimed in the independent claims for performing keep-alive monitoring on subscriber sessions, so as to reduce the keep-alive monitoring traffic of an IP edge device in an access network, and reduce the delay of the IP edge device in processing the subscriber sessions. Preferred embodiments are covered by the dependent claims.

### BRIEF DESCRIPTION OF THE DRAWINGS

FIG. 1 is a flow chart of a method for keep-alive monitoring on subscriber sessions according to an embodiment of the present invention;
Fig. 2 is a schematic view of the method for keep-alive monitoring on subscriber sessions according to a first embodiment of the present invention;
FIG. 3 is a schematic view of the method for keep-alive monitoring on subscriber sessions according to a second embodiment of the present invention;
FIG. 4 is a schematic view of the method for keep-alive monitoring on subscriber sessions according to a third embodiment of the present invention;
FIG. 5 is a schematic view of the method for keep-alive monitoring on subscriber sessions according to a fourth embodiment of the present invention;
FIG. 6 is a schematic view of the method for keep-alive monitoring on subscriber sessions according to a fifth embodiment of the present invention;
FIG. 7 is a schematic view of the method for keep-alive monitoring on subscriber sessions according to a sixth embodiment of the present invention;
FIG. 8 is a schematic view of the method for keep-alive monitoring on subscriber sessions according to a seventh embodiment of the present invention;
FIG. 9 is a schematic view of the method for keep-alive monitoring on subscriber sessions according to an eighth embodiment of the present invention;
FIG. 10 is a schematic view of the method for keep-alive monitoring on subscriber sessions according to a ninth embodiment of the present invention;
FIG. 11 is a schematic view of the method for keep-alive monitoring on subscriber sessions according to a tenth embodiment of the present invention;
FIG. 12 is a flow chart of another method for keep-alive monitoring on subscriber sessions according to an embodiment of the present invention;
FIG. 13 is a schematic view of the method for keep-alive monitoring on subscriber sessions according to an eleventh embodiment of the present invention;
FIG. 14 is a schematic view of the method for keep-alive monitoring on subscriber sessions according to a twelfth embodiment of the present invention; and
FIG. 15 is a schematic view of the method for performing keep-alive monitoring on subscriber sessions according to a thirteenth embodiment of the present invention.

### DETAILED DESCRIPTION OF THE EMBODIMENTS

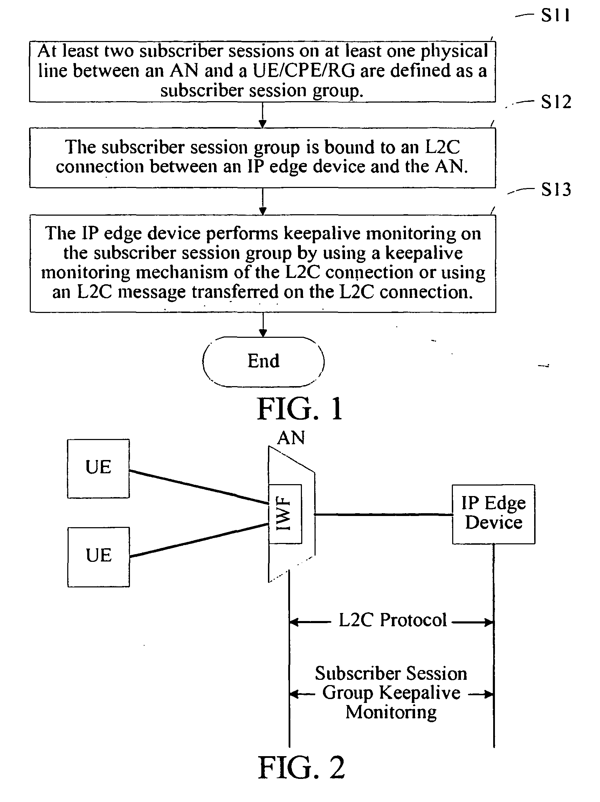

In order to reduce the keep-alive monitoring traffic of an IP edge device in an access network, and reduce the delay of the IP edge device in processing subscriber sessions, the present invention provides a method for keep-alive monitoring on subscriber sessions. Referring to FIG. 1, the method includes the following steps.

In Step S11, at least two subscriber sessions on at least one physical line between an AN and a UE/CPE/RG are defined as a subscriber session group.

In Step S12, the subscriber session group is bound to an L2C connection between an IP edge device and the AN.

In Step S 13, the IP edge device performs keep-alive monitoring on the subscriber session group by using a keep-alive monitoring mechanism of the L2C connection or using an L2C message transferred on the L2C connection.

In the Step S11, the following two methods for grouping subscriber sessions may be used.

In one method, at least two subscriber sessions on a plurality of (at least two) physical lines (including wired or wireless lines) between an AN and a UE (such as a mobile terminal, and may also be a CPE or an RG) are defined as a subscriber session group.

In the other method, at least two subscriber sessions on a physical line (including a wired or wireless line) between an AN and a UE (may also be a CPE or an RG) are defined as a subscriber session group.

Specifically, the method for keep-alive monitoring on subscriber session includes, but not limited to, the following five embodiments.

In a first embodiment, referring to FIG. 2, at least two subscriber sessions on a plurality of (at least two) physical lines (including wired or wireless lines) between an AN and a UE (may also be a CPE or an RG) are defined as a subscriber session group, and the subscriber session group is bound to an L2C connection between an IP edge device (BNG/BRAS) and the AN. The IP edge device (BNG/BRAS) performs keep-alive monitoring on the subscriber session group by using a keep-alive monitoring mechanism of the L2C connection or using an L2C message transferred on the L2C connection. When the IP edge device monitors that an anomaly occurs between the BNG/BRAS and the AN according to the keep-alive monitoring mechanism of the L2C connection, or the IP edge device fails to receive an L2C message transferred by the AN within a predetermined period of time, it is determined that the subscriber session group is abnormal.

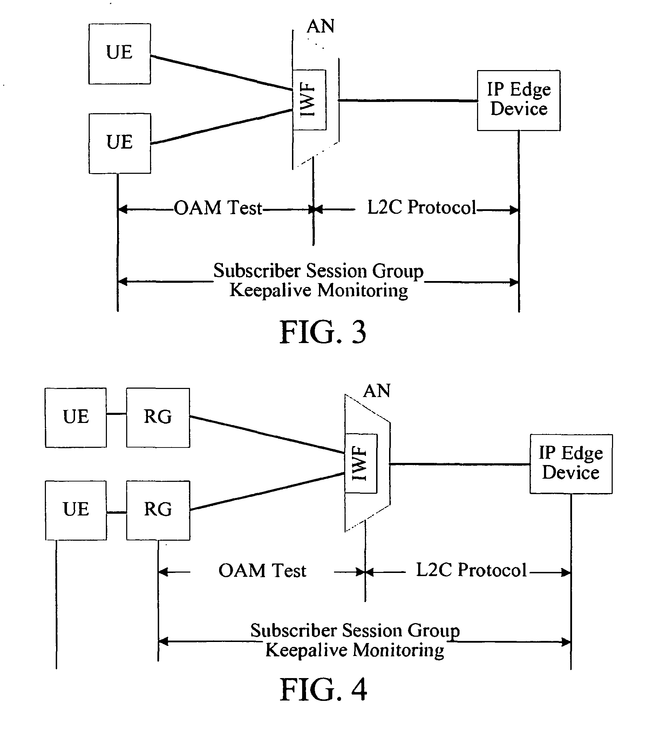

In a second embodiment, referring to FIG. 3, at least two subscriber sessions on a physical line (including a wired or wireless line) between an AN and a UE (may also be a CPE) are defined as a subscriber session group, the physical line is bound to an L2C connection between an IP edge device (BNG/BRAS) and the AN, and the subscriber session group is bound to the L2C connection. The AN performs keep-alive monitoring on the subscriber session group by performing an OAM loop test on the physical line, and transfers a monitoring result to the IP edge device by using an L2C message through the L2C connection. The IP edge device performs keep-alive monitoring on the subscriber session group by using a keep-alive monitoring mechanism of the L2C connection or using the L2C message transferred on the L2C connection. When the IP edge device receives the L2C message transferred by the AN within a predetermined period of time and the monitoring result carried in the L2C message indicates that the physical line is abnormal, it is determined that the subscriber session group is abnormal; alternatively, when the IP edge device monitors that an anomaly occurs between the BNG/BRAS and the AN according to the keep-alive monitoring mechanism of the L2C connection, or the IP edge device fails to receive the L2C message transferred by the AN within the predetermined period of time, it is determined that the subscriber session group is abnormal.

In a third embodiment, referring to FIG. 4, at least two subscriber sessions on a physical line (including a wired or wireless line) between an AN and an RG are defined as a subscriber session group, the physical line is bound to an L2C connection between an IP edge device (BNG/BRAS) and the AN, and the subscriber session group is bound to the L2C connection. The AN performs keep-alive monitoring on the subscriber session group by performing an OAM loop test on the physical line, and transfers a monitoring result to the IP edge device by using an L2C message through the L2C connection. The IP edge device performs keep-alive monitoring on the subscriber session group by using a keep-alive monitoring mechanism of the L2C connection or using the L2C message transferred on the L2C connection. When the IP edge device receives the L2C message transferred by the AN within a predetermined period of time and the monitoring result carried in the L2C message indicates that the physical line is abnormal, it is determined that the subscriber session group is abnormal; alternatively, when the IP edge device monitors that an anomaly occurs between the BNG/BRAS and the AN according to the keep-alive monitoring mechanism of the L2C connection, or the IP edge device fails to receive the L2C message transferred by the AN within the predetermined period of time, it is determined that the subscriber session group is abnormal.

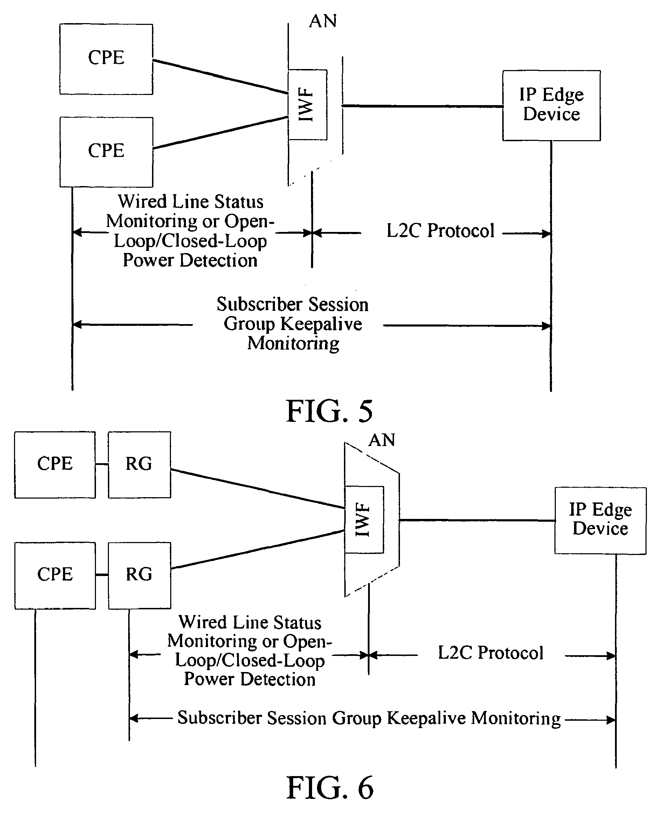

In a fourth embodiment, referring to FIG. 5, at least two subscriber sessions on a physical line (including a wired or wireless line) between an AN and a CPE (may also be a UE) are defined as a subscriber session group, the physical line is bound to an L2C connection between an IP edge device (BNG/BRAS) and the AN, and the subscriber session group is bound to the L2C connection. The AN performs keep-alive monitoring on the subscriber session group by monitoring a physical layer status or link layer status of the physical line through wired line status monitoring or open-loop/closed-loop power detection, and transfers a monitoring result to the IP edge device by using an L2C message through the L2C connection. The IP edge device performs keep-alive monitoring on the subscriber session group by using a keep-alive monitoring mechanism of the L2C connection or using the L2C message transferred on the L2C connection. When the IP edge device receives the L2C message transferred by the AN within a predetermined period of time and the monitoring result carried in the L2C message indicates that the physical line is abnormal, it is determined that the subscriber session group is abnormal; alternatively, when the IP edge device monitors that an anomaly occurs between the BNG/BRAS and the AN according to the keep-alive monitoring mechanism of the L2C connection, or the IP edge device fails to receive the L2C message transferred by the AN within the predetermined period of time, it is determined that the subscriber session group is abnormal.

In a fifth embodiment, referring to FIG. 6, at least two subscriber sessions on a physical line (including a wired or wireless line) between an AN and an RG are defined as a subscriber session group, the physical line is bound to an L2C connection between an IP edge device (BNG/BRAS) and the AN, and the subscriber session group is bound to the L2C connection. The AN performs keep-alive monitoring on the subscriber session group by monitoring a physical layer status or link layer status of the physical line through wired line status monitoring or open-loop/closed-loop power detection, and transfers a monitoring result to the IP edge device by using an L2C message through the L2C connection. The IP edge device performs keep-alive monitoring on the subscriber session group by using a keep-alive monitoring mechanism of the L2C connection or using the L2C message transferred on the L2C connection. When the IP edge device receives the L2C message transferred by the AN within a predetermined period of time and the monitoring result carried in the L2C message indicates that the physical line is abnormal, it is determined that the subscriber session group is abnormal; alternatively, when the IP edge device monitors that an anomaly occurs between the BNG/BRAS and the AN according to the keep-alive monitoring mechanism of the L2C connection, or the IP edge device fails to receive the L2C message transferred by the AN within the predetermined period of time, it is determined that the subscriber session group is abnormal.

With the above five manners for performing keep-alive monitoring on subscriber session, further, the IP edge device may also perform keep-alive monitoring on each subscriber session in the subscriber session group. In addition, the IP edge device may configure a keep-alive monitoring period for the subscriber session group, and configure a keep-alive monitoring period for each subscriber session in the subscriber session group.

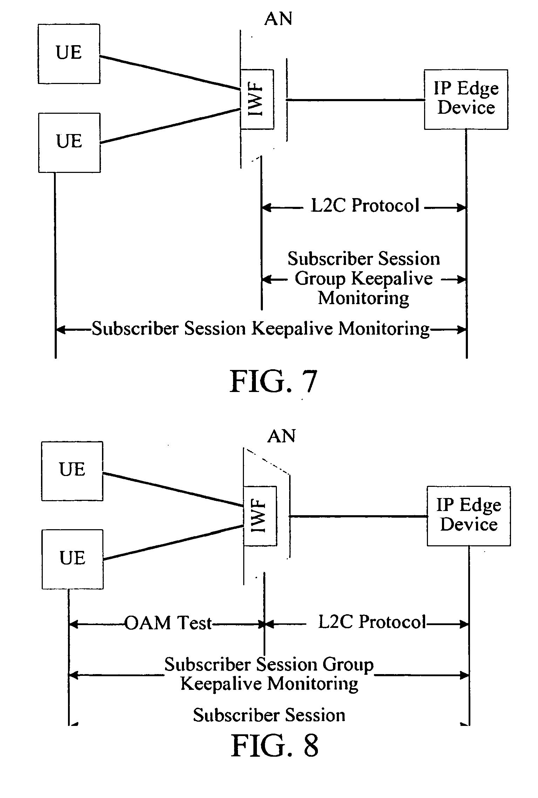

Embodiments 6 to 10 in which an IP edge device performs keep-alive monitoring on a subscriber session group and each subscriber session in the subscriber session group are described below with reference to FIGs. 7 to 11, respectively.

In a sixth embodiment, referring to FIG. 7, at least two subscriber sessions on a plurality of (at least two) physical lines (including wired or wireless lines) between an AN and a UE (may also be a CPE or an RG) are defined as a subscriber session group, and the subscriber session group is bound to an L2C connection between an IP edge device (BNG/BRAS) and the AN. The IP edge device (BNG/BRAS) performs keep-alive monitoring on the subscriber session group and each subscriber session in the subscriber session group by using a keep-alive monitoring mechanism of the L2C connection or using an L2C message transferred on the L2C connection. When the IP edge device monitors that an anomaly occurs between the BNG/BRAS and the AN according to the keep-alive monitoring mechanism of the L2C connection, or the IP edge device fails to receive an L2C message transferred by the AN within a predetermined period of time, it is determined that the subscriber session group and the subscriber sessions in the subscriber session group are abnormal.

In a seventh embodiment, referring to FIG. 8, at least two subscriber sessions on a physical line (including a wired or wireless line) between an AN and a UE (may also be a CPE) are defined as a subscriber session group, the physical line is bound to an L2C connection between an IP edge device (BNG/BRAS) and the AN, and the subscriber session group is bound to the L2C connection. The AN performs keep-alive monitoring on the subscriber session group and each subscriber session in the subscriber session group by performing an OAM loop test on the physical line, and transfers a monitoring result to the IP edge device by using an L2C message through the L2C connection. The IP edge device performs keep-alive monitoring on the subscriber session group and each subscriber session in the subscriber session group by using a keep-alive monitoring mechanism of the L2C connection or using the L2C message transferred on the L2C connection. When the IP edge device receives the L2C message transferred by the AN within a predetermined period of time and the monitoring result carried in the L2C message indicates that the physical line is abnormal, it is determined that the subscriber session group and the subscriber sessions in the subscriber session group are abnormal; alternatively, when the IP edge device monitors that an anomaly occurs between the BNG/BRAS and the AN according to the keep-alive monitoring mechanism of the L2C connection, or the IP edge device fails to receive the L2C message transferred by the AN within the predetermined period of time, it is determined that the subscriber session group and the subscriber sessions in the subscriber session group arc abnormal.

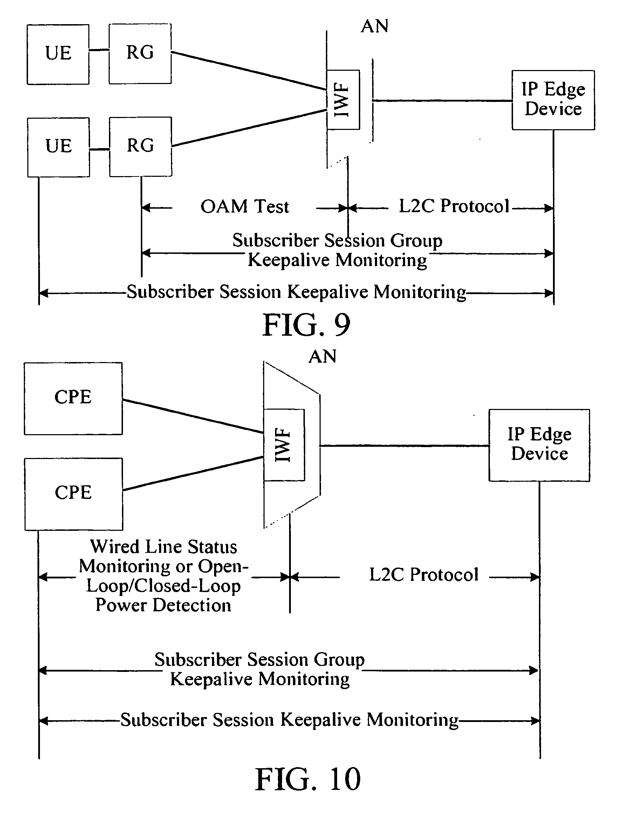

In an eighth embodiment, referring to FIG. 9, at least two subscriber sessions on a physical line (including a wired or wireless line) between an AN and an RG are defined as a subscriber session group, the physical line is bound to an L2C connection between an IP edge device (BNG/BRAS) and the AN, and the subscriber session group is bound to the L2C connection. The AN performs keep-alive monitoring on the subscriber session group and each subscriber session in the subscriber session group by performing an OAM loop test on the physical line, and transfers a monitoring result to the IP edge device by using an L2C message through the L2C connection. The IP edge device performs keep-alive monitoring on the subscriber session group and each subscriber session in the subscriber session group by using a keep-alive monitoring mechanism of the L2C connection or using the L2C message transferred on the L2C connection. When the IP edge device receives the L2C message transferred by the AN within a predetermined period of time and the monitoring result carried in the L2C message indicates that the physical line is abnormal, it is determined that the subscriber session group and the subscriber sessions in the subscriber session group are abnormal; alternatively, when the IP edge device monitors that an anomaly occurs between the BNG/BRAS and the AN according to the keep-alive monitoring mechanism of the L2C connection, or the IP edge device fails to receive the L2C message transferred by the AN within the predetermined period of time, it is determined that the subscriber session group and the subscriber sessions in the subscriber session group are abnormal.

In a ninth embodiment, referring to FIG. 10, at least two subscriber sessions on a physical line (including a wired or wireless line) between an AN and a CPE (may also be a UE) are defined as a subscriber session group, the physical line is bound to an L2C connection between an IP edge device (BNG/BRAS) and the AN, and the subscriber session group is bound to the L2C connection. The AN performs keep-alive monitoring on the subscriber session group and each subscriber session in the subscriber session group by monitoring a physical layer status or link layer status of the physical line through wired line status monitoring or open-loop/closed-loop power detection, and transfers a monitoring result to the IP edge device by using an L2C message through the L2C connection. The IP edge device performs keep-alive monitoring on the subscriber session group and each subscriber session in the subscriber session group by using a keep-alive monitoring mechanism of the L2C connection or using the L2C message transferred on the L2C connection. When the IP edge device receives the L2C message transferred by the AN within a predetermined period of time and the monitoring result carried in the L2C message indicates that the physical line is abnormal, it is determined that the subscriber session group and the subscriber sessions in the subscriber session group are abnormal; alternatively, when the IP edge device monitors that an anomaly occurs between the BNG/BRAS and the AN according to the keep-alive monitoring mechanism of the L2C connection, or the IP edge device fails to receive the L2C message transferred by the AN within the predetermined period of time, it is determined that the subscriber session group and the subscriber sessions in the subscriber session group are abnormal.

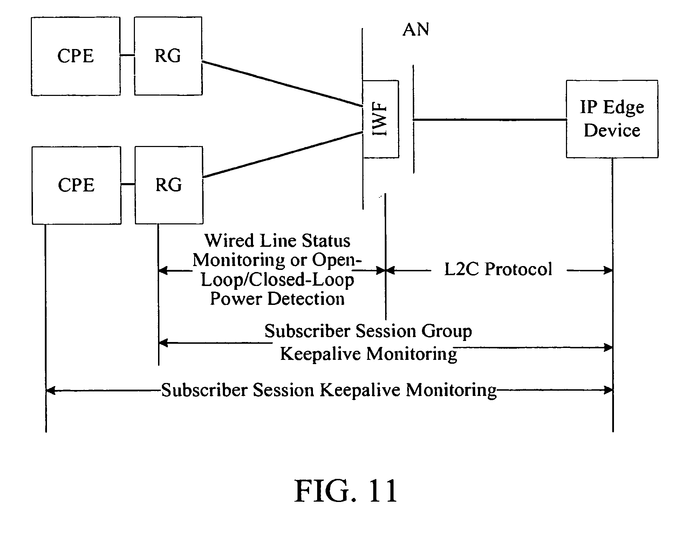

In a tenth embodiment, referring to FIG. 11, at least two subscriber sessions on a physical line (including a wired or wireless line) between an AN and an RG are defined as a subscriber session group, the physical line is bound to an L2C connection between an IP edge device (BNG/BRAS) and the AN, and the subscriber session group is bound to the L2C connection. The AN performs keep-alive monitoring on the subscriber session group and each subscriber session in the subscriber session group by monitoring a physical layer status or link layer status of the physical line through wired line status monitoring or open-loop/closed-loop power detection, and transfers a monitoring result to the IP edge device by using an L2C message through the L2C connection. The IP edge device performs keep-alive monitoring on the subscriber session group and each subscriber session in the subscriber session group by using a keep-alive monitoring mechanism of the L2C connection or using the L2C message transferred on the L2C connection. When the IP edge device receives the L2C message transferred by the AN within a predetermined period of time and the monitoring result carried in the L2C message indicates that the physical line is abnormal, it is determined that the subscriber session group and the subscriber sessions in the subscriber session group are abnormal; alternatively, when the IP edge device monitors that an anomaly occurs between the BNG/BRAS and the AN according to the keep-alive monitoring mechanism of the L2C connection, or the IP edge device fails to receive the L2C message transferred by the AN within the predetermined period of time, it is determined that the subscriber session group and the subscriber sessions in the subscriber session group are abnormal.

The present invention provides a system for performing keep-alive monitoring on subscriber sessions, which includes a UE/CPE/RG, an AN, and an IP edge device.

The IP edge device is configured to store a preset subscriber session group definition rule for defining at least two subscriber sessions on at least one physical line between the AN and the UE/CPE/RG as a subscriber session group; bind the subscriber session group to an L2C connection between the IP edge device and the AN; and perform keep-alive monitoring on the subscriber session group by using a keep-alive monitoring mechanism of the L2C connection or using an L2C message transferred on the L2C connection.

The present invention provides an IP edge device, which includes a storage unit, a binding unit, and a monitoring unit.

The storage unit is configured to store a preset subscriber session group definition rule for defining at least two subscriber sessions on at least one physical line between an AN and a UE/CPE/RG as a subscriber session group.

The binding unit is configured to bind the subscriber session group to an L2C connection between the IP edge device and the AN according to the subscriber session group definition rule stored in the storage unit.

The monitoring unit is configured to perform keep-alive monitoring on the subscriber session group by using a keep-alive monitoring mechanism of the L2C connection or using an L2C message transferred on the L2C connection.

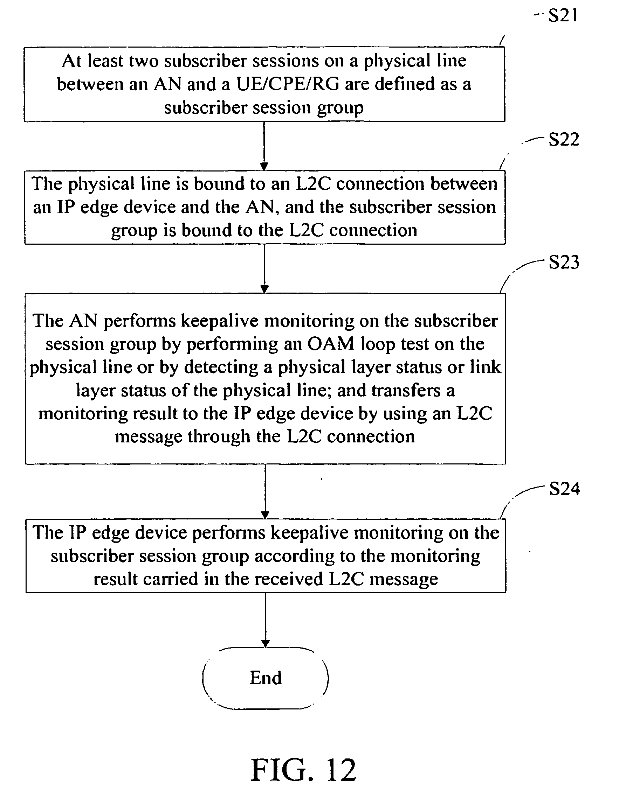

The present invention further provides a method for keep-alive monitoring on subscriber sessions. Referring to FIG. 12, the method includes the following steps.

In Step S21, at least two subscriber sessions on a physical line between an AN and a UE/CPE/RG are defined as a subscriber session group.

In Step S22, the physical line is bound to an L2C connection between an IP edge device and the AN, and the subscriber session group is bound to the L2C connection.

In Step S23, the AN performs keep-alive monitoring on the subscriber session group by performing an OAM loop test on the physical line or detecting a physical layer status or link layer status of the physical line; and transfers a monitoring result to the IP edge device by using an L2C message through the L2C connection.

In Step S24, the IP edge device performs keep-alive monitoring on the subscriber session group according to the monitoring result carried in the received L2C message.

In this step, when the IP edge device receives the L2C message transferred by the AN, and the monitoring result carried in the L2C message indicates that the physical line is abnormal, it is determined that the subscriber session group is abnormal.

Further, in this step, the IP edge device may also perform keep-alive monitoring on the subscriber session group according to a monitoring result of a keep-alive monitoring mechanism of the L2C connection or by determining whether the L2C message transferred by the AN is received within a predetermined period of time or not. When the IP edge device monitors that an anomaly occurs between the BNG/BRAS and the AN according to the keep-alive monitoring mechanism of the L2C connection, or the IP edge device fails to receive an L2C message (including an L2C message carrying the monitoring result and other L2C messages) transferred by the AN within the predetermined period of time, it is determined that the subscriber session group is abnormal.

Further, the IP edge device not only may perform keep-alive monitoring on the subscriber session group, but may also perform keep-alive monitoring on each subscriber session in the subscriber session group. In addition, the IP edge device may configure a keep-alive monitoring period for the subscriber session group, and configure a keep-alive monitoring period for each subscriber session in the subscriber session group.

The present invention further provides a system for performing keep-alive monitoring on subscriber sessions, which includes a UE/CPE/RG, an AN, and an IP edge device.

The IP edge device is configured to store a preset subscriber session group definition rule for defining at least two subscriber sessions on a physical line between the AN and the UE/CPE/RG as a subscriber session group; bind the physical line to an L2C connection between the IP edge device and the AN, and bind the subscriber session group to the L2C connection; and perform keep-alive monitoring on the subscriber session group according to a monitoring result carried in a received L2C message.

The AN is configured to perform keep-alive monitoring on the subscriber session group by performing an OAM loop test on the physical line or detecting a physical layer status or link layer status of the physical line; and transfer a monitoring result to the IP edge device by using an L2C message through the L2C connection.

The present invention further provides an IP edge device, which includes a storage unit, a binding unit, and a monitoring unit.

The storage unit is configured to store a preset subscriber session group definition rule for defining at least two subscriber sessions on a physical line between an AN and a UE/CPE/RG as a subscriber session group.

The binding unit is configured to bind the physical line to an L2C connection between the IP edge device and the AN, and bind the subscriber session group to the L2C connection according to the subscriber session group definition rule stored in the storage unit.

The monitoring unit is configured to perform keep-alive monitoring on the subscriber session group according to a monitoring result carried in a received L2C message.

Three embodiments are described below in detail.

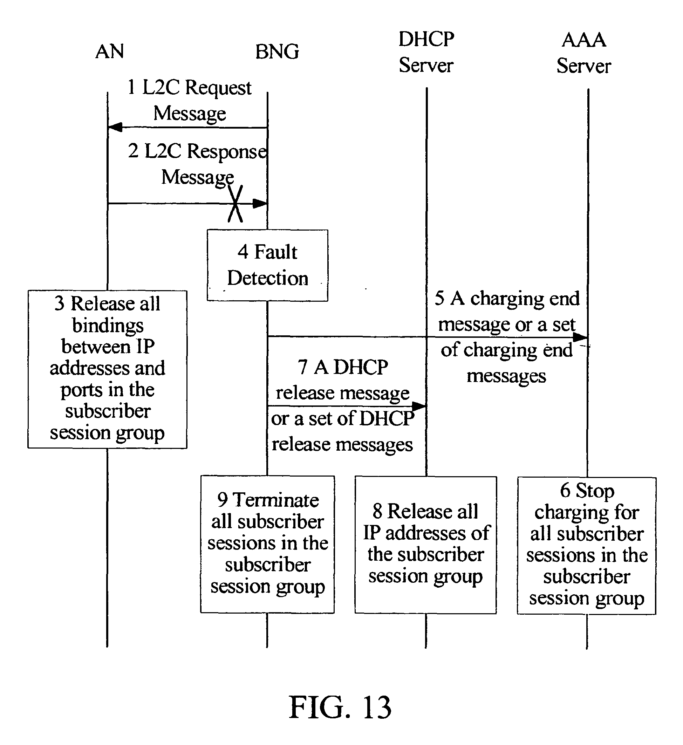

In an eleventh embodiment, keep-alive monitoring is performed on a subscriber session group by an L2C method. Referring to FIG. 13, this embodiment includes the following steps.

In Steps 1-2, a keep-alive monitoring mechanism of an L2C connection between a BNG/BRAS and an AN is used as a keep-alive monitoring mechanism of a subscriber session group, or keep-alive monitoring is performed on the subscriber session group through L2C messages between the BNG/BRAS (taking the BNG as an example in the figure) and the AN.

The former mode may be implemented through General Switch Management Protocol (GSMP) Adjacency Protocol messages between the BNG/BRAS and the AN.

For the latter mode, as shown in FIG. 13, the BNG/BRAS initiates an L2C request message, and under a normal condition, the BNG/BRAS will receive an L2C response message from the AN within a predetermined period of time, indicating that the connection between the BNG/BRAS and the AN is normal.

When a fault occurs between the BNG/BRAS and the AN, the BNG/BRAS cannot receive the L2C response message within the predetermined period of time. When a fault occurs to the AN, the AN cannot return the L2C response message, that is, the BNG/BRAS cannot receive the L2C response message within the predetermined period of time.

In Step 3, optionally, when a fault occurs to the AN, or a fault occurs between the BNG/BRAS and the AN, the keep-alive monitoring mechanism of the L2C connection monitors that an anomaly occurs between the BNG/BRAS and the AN, or the AN detects that the L2C response message cannot reach the BNG/BRAS through a Transmission Control Protocol (TCP). At this time, the AN releases all bindings between IP addresses and ports in the subscriber session group to protect against security attacks.

In Step 4, fault detection is performed.

When the keep-alive monitoring mechanism of the L2C connection monitors that an anomaly occurs between the BNG/BRAS and the AN, or the BNG/BRAS fails to receive an L2C response message within a predetermined period of time, it is determined that a fault occurs between the BNG/BRAS and the AN, or a fault occurs to the AN.

In Step 5, the BNG/BRAS generates a charging end message (corresponding to the subscriber session group) or a set of charging end messages (corresponding to each subscriber session in the subscriber session group) for the subscriber session group, and sends the charging end message or the set of charging end messages to an authentication, authorization and accounting (AAA) server, in which the charging end message or the set of charging end messages are configured to stop charging for all subscriber sessions in the subscriber session group.

In Step 6, the AAA server receives the charging end message or the set of charging end messages, and stops charging for all subscriber sessions in the subscriber session group.

In Step 7, the BNG/BRAS generates a DHCP release message (corresponding to the subscriber session group) or a set of DHCP release messages (corresponding to cach subscriber session in the subscriber session group) for the subscriber session group, and sends the DHCP release message or the set of DHCP release messages to a DHCP server, in which the DHCP release message or the set of DHCP release messages are configure to release all IP addresses of the subscriber session group.

In Step 8, the DHCP server receives the DHCP release message or the set of DHCP release messages, and releases all IP addresses of the subscriber session group, and may also send a connection release indication message to a location server to notify the location server to release a corresponding connection.

In Step 9, the BNG/BRAS terminates all subscriber sessions in the subscriber session group.

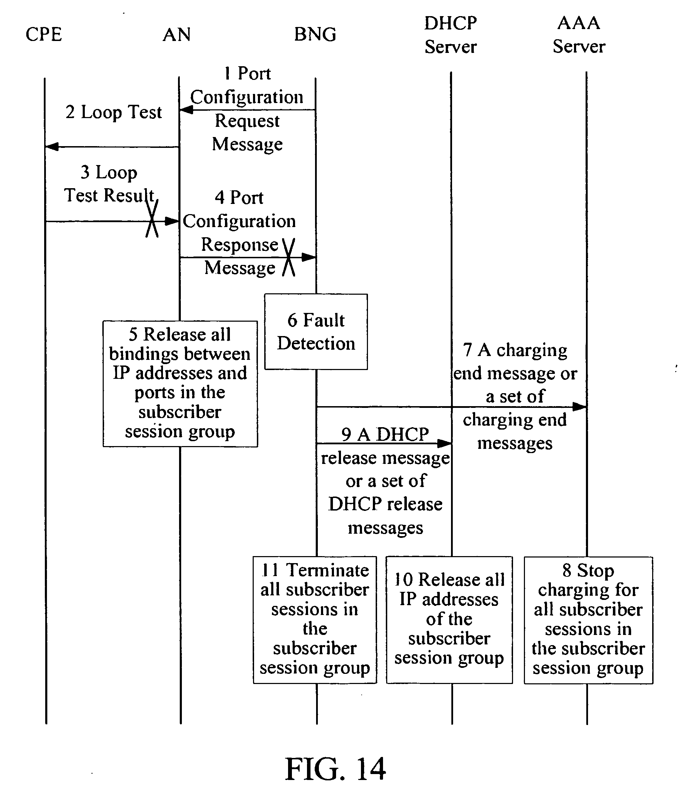

In a twelfth embodiment, keep-alive monitoring is performed on a subscriber session group by using a mechanism combining L2C with an OAM loop test. Referring to FIG. 14, this embodiment includes the following steps.

In Step 1, a BNG/BRAS (taking a BNG as an example in the figure) initiates an L2C OAM loop test request message to trigger an OAM loop test. The L2C OAM loop test request message may be a Layer 2 Control Protocol (L2CP) port configuration message.

In Steps 2-3, keep-alive monitoring is performed on a subscriber session group by performing an OAM loop test on a physical line between a CPE/RG/UE (taking a CPE as an example in the figure) and an AN.

Here, the AN starts the OAM loop test according to an L2C message delivered by the BNG/BRAS, and under a normal condition, the AN will receive an OAM loop test result within a predetermined period of time, indicating that the connection between the CPE/RG/UE and the AN is normal.

When a fault occurs between the CPE/RG/UE and the AN, the AN cannot receive the OAM loop test result within the predetermined period of time, or receives a false OAM loop test result, or the OAM loop test is abnormal. At this time, the AN reports an L2C response message to indicate that the OAM loop test result is abnormal, or does not report the L2C response message.

In Step 4, the AN reports an OAM loop test result to the BNG/BRAS (taking the BNG as an example in the figure) through an L2C message.

Optionally, a keep-alive monitoring mechanism of an L2C connection between a BNG/BRAS and an AN is used as a keep-alive monitoring mechanism of a subscriber session group, or keep-alive monitoring is performed on the subscriber session group through L2C messages between the BNG/BRAS and the AN.

The former mode may be implemented through GSMP Adjacency Protocol messages between the BNG/BRAS and the AN.

For the latter mode, keep-alive monitoring is performed on the subscriber session group through L2C messages between the BNG/BRAS and the AN: the BNG/BRAS initiates an L2C request message, and under a normal condition, the BNG/BRAS will receive an L2C response message from the AN within a predetermined period of time, indicating that the connection between the BNG/BRAS and the AN is normal.

When a fault occurs between the BNG/BRAS and the AN, the BNG/BRAS cannot receive the L2C response message within the predetermined period of time. When a fault occurs to the AN, the AN cannot return the L2C response message, that is, the BNG/BRAS cannot receive the L2C response message within the predetermined period of time.

In Step 5, optionally, when the keep-alive monitoring mechanism of the L2C connection monitors that an anomaly occurs between the BNG/BRAS and the AN, or when the AN cannot receive the OAM loop test result within the predetermined period of time, or receives a false OAM loop test result, or the OAM loop test is abnormal, or when a fault occurs to the AN, or a fault occurs between the BNG/BRAS and the AN, and the AN detects that the L2C response message cannot reach the BNG/BRAS through a TCP, the AN releases all bindings between IP addresses and ports in the subscriber session group to protect against security attacks.

Steps 6-11 are the same as the Steps 4-9 in the eleventh embodiment.

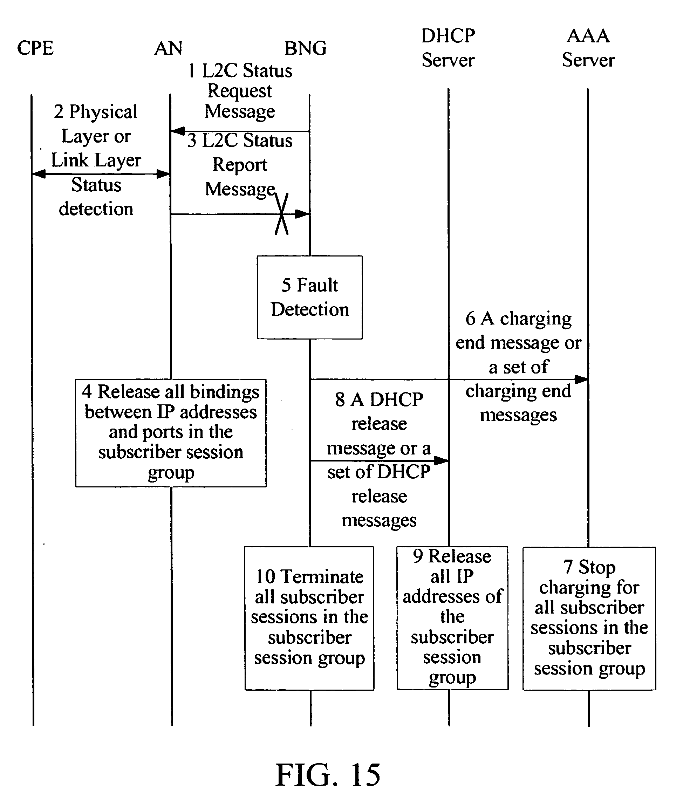

In a thirteenth embodiment, keep-alive monitoring is performed on a subscriber session group by preferentially using a physical layer or link layer status monitoring mechanism, optionally in combination with the L2C monitoring mechanism. Referring to FIG. 15, this embodiment includes the following steps.

In Step 1, optionally, a BNG/BRAS (taking a BNG as an example in the figure) initiates an L2C status request message to trigger an AN to passively report a (physical layer or link layer) status of a physical line. The L2C status request message may be a GSMP State and Statistics Message or an L2CP message.

In Step 2, the AN monitors a (physical layer or link layer) status of a physical line between the AN and a CPE/RG/UE (taking a CPE as an example in the figure) through wired line status monitoring or open-loop/closed-loop power detection.

In Step 3, the AN passively reports the (physical layer or link layer) status of the line to the BNG/BRAS (taking the BNG as an example in the figure) through an L2C message. Alternatively, when finding that a (physical layer or link layer) fault occurs to the physical line, the AN actively reports the (physical layer or link layer) fault of the line to the BNG/BRAS (taking the BNG as an example in the figure) through an L2C message, periodically or selectively.

Optionally, a keep-alive monitoring mechanism of an L2C connection between a BNG/BRAS and an AN is used as a keep-alive monitoring mechanism of a subscriber session group, or keep-alive monitoring is performed on the subscriber session group through L2C messages between the BNG/BRAS and the AN.

The former mode may be implemented through GSMP Adjacency Protocol messages between the BNGBRAS and the AN.

For the latter mode, keep-alive monitoring is performed on the subscriber session group through L2C messages between the BNG/BRAS and the AN: under a normal condition, the BNG/BRAS will receive an L2C status report message actively or passively reported by the AN within a predetermined period of time. When a fault occurs between the BNG/BRAS and the AN, or a fault occurs to the AN, the BNG/BRAS cannot receive the L2C status report message within the predetermined period of time.

In Step 4, optionally, when the AN receives a status report indicating that an anomaly occurs to the physical layer or link layer (for example, a wired or wireless line is disconnected), the AN releases all bindings between IP addresses and ports in the subscriber session group. Alternatively, when the keep-alive monitoring mechanism of the L2C connection monitors that an anomaly occurs between the BNG/BRAS and the AN, or when a fault occurs to the AN, or a fault occurs between the BNG/BRAS and the AN, and the AN detects that the L2C status report message cannot reach the BNG through a TCP, the AN releases all bindings between IP addresses and ports in the subscriber session group to protect against security attacks.

In Step 5, fault detection is performed.

When the keep-alive monitoring mechanism of the L2C connection monitors that an anomaly occurs between the BNG/BRAS and the AN, or the BNG/BRAS receives a line abnormal message reported by the AN (optionally, corresponding to the optional content in the Steps 1-2, the BNG/BRAS fails to receive the L2C status report message within the predetermined period of time), the subscriber session group bound to the line is processed as follows.

Steps 6-10 are the same as the Steps 5-9 in the eleventh embodiment.

In a fourteenth embodiment, a solution of performing keep-alive monitoring on both a subscriber session group and individual subscriber sessions is provided.

In order to make the function of performing keep-alive monitoring based on the subscriber session group more comprehensive, the assumption in the prior art is used. When the keep-alive monitoring mechanism based on the subscriber session group is introduced, it is assumed that every ten subscriber sessions constitute a subscriber session group, and a keep-alive monitoring period for each subscriber session group is one minute. Typically, the keep-alive monitoring period based on each subscriber session may be increased to ten minutes, and at this time, each BNG/BRAS only needs to send 4,000,000 subscriber session keep-alive monitoring messages per minute. That is, the traffic of the subscriber session keep-alive monitoring messages is decreased by 80% as compared with the prior art. The more subscriber sessions that each subscriber session group contains, the greater the decrease in the keep-alive monitoring message traffic will be.

To sum up, in the present invention, because keep-alive monitoring is performed based on a subscriber session group, the keep-alive monitoring traffic of the IP edge device in the access network is reduced, and the delay of the IP edge device in processing the subscriber sessions is reduced.

Further, various possible methods for grouping subscriber sessions are provided in the embodiments of the present invention to better support the present invention.

Still further, in the present invention, the solution combining the mechanism of performing keep-alive monitoring based on a subscriber session group with the mechanism of performing keep-alive monitoring based on each subscriber session in the prior art is provided. In the solution, the IP edge device may configure a keep-alive monitoring period for the subscriber session group, and may also configure a keep-alive monitoring period for each subscriber session in the subscriber session group.

Such a solution of performing keep-alive monitoring by combining a subscriber session group with individual subscriber sessions can maintain the keep-alive monitoring mechanism of each subscriber session between the CPE/RG/UE and the IP edge device (BNG/BRAS), and is thus compatible with the prior art to the greatest extent. Moreover, through the keep-alive monitoring mechanism based on the subscriber session group, the IP edge device can easily process the related subscriber sessions in batches, thus greatly reducing the keep-alive monitoring period based on each subscriber session.

It will be apparent to those skilled in the art that various modifications and variations can be made to the present invention. The scope of the invention is defined by the appended claims.

## Claims

1. A method for keep-alive monitoring on subscriber sessions, comprising:
defining (S21) at least two subscriber sessions on at least one physical line between an access node, AN, and one of a user equipment, UE, customer premises equipment, CPE, and residential gateway, RG, as a subscriber session group, wherein said RG couples said UE or said CPE to said AN, and wherein the subscriber session is a session established between an Internet Protocol, IP, edge device and one of the UE and the CPE;
binding (S22) the subscriber session group to a Layer 2 control, L2C, connection between an IP edge device and the AN; and binding (S22) the physical line to the L2C connection;
performing (S23), by the AN, keep-alive monitoring on the subscriber session group by performing an Operations, Administration and Maintenance, OAM, loop test on the physical line or by detecting a physical layer status or link layer status of the physical line, and transferring a monitoring result to the IP edge device by using an L2C message through the L2C connection;
performing (S24), by the IP edge device, keep-alive monitoring on the subscriber session group according to the monitoring result carried in the received L2C message.

2. The method according to claim 1, wherein the IP edge device performs keep-alive monitoring on each subscriber session in the subscriber session group.

3. The method according to claim 2, wherein the IP edge device configures a keep-alive monitoring period for the subscriber session group, and the IP edge device configures a keep-alive monitoring period for each subscriber session in the subscriber session group.

4. The method according to claim 1, wherein when it is determined that the subscriber session group is abnormal, network resources occupied by all subscriber sessions in the subscriber session group are released.

5. The method according to claim 4, wherein the releasing the network resources occupied by all subscriber sessions in the subscriber session group comprises:
generating, by the IP edge device, a charging end message, and sending the charging end message to an authentication, authorization and accounting, AAA, server; receiving, by the AAA server, the charging end message, and stopping charging for all subscriber sessions in the subscriber session group;
generating, by the IP edge device, a Dynamic Host Control Protocol, DHCP, release message, and sending the DHCP release message to a DHCP server; receiving, by the DHCP server, the DHCP release message, and releasing all IP addresses occupied by the subscriber session group; and
terminating, by the IP edge device, all subscriber sessions in the subscriber session group.

6. The method according to claim 5, wherein the releasing the network resources occupied by all subscriber sessions in the subscriber session group comprises: releasing, by the AN, all bindings between IP addresses and ports in the subscriber session group.

7. A system for performing keep-alive monitoring on subscriber sessions, comprising:
one of a user equipment, UE, customer premises equipment, CPE, and residential gateway, RG, an access node, AN, and an IP edge device, wherein
the AN is configured to perform keep-alive monitoring on the subscriber session group by performing an Operations, Administration and Maintenance, OAM, loop test on the physical line or by detecting a physical layer status or link layer status of the physical line; and to transfer a monitoring result to the IP edge device by using an L2C message through the L2C connection;
the IP edge device is configured to store a preset subscriber session group definition rule for defining at least two subscriber sessions on at least one physical line between the AN and one of the UE, CPE and RG as a subscriber session group; wherein said RG couples said UE or said CPE to said AN, and wherein the subscriber session is a session established between an Internet Protocol, IP, edge device and one of the UE and the CPE; and to bind the subscriber session group to a Layer 2 control, L2C, connection between the IP edge device and the AN; to bind the physical line to the L2C connection and to perform keep-alive monitoring on the subscriber session group according to the monitoring result carried in the received L2C message..

8. An IP edge device, comprising:
a storage unit, configured to store a preset subscriber session group definition rule for defining at least two subscriber sessions on at least one physical line between an access node, AN, and one of a user equipment UE, customer premises equipment, CPE, and residential gateway, RG, as a subscriber session group; wherein said RG couples said UE or said CPE to said AN, and wherein the subscriber session is a session established between an Internet Protocol, IP, edge device and one of the UE and the CPE;
a binding unit, configured to bind the subscriber session group to a Layer 2 control, L2C, connection between the IP edge device and the AN, to bind the physical line to the L2C connection according to the subscriber session group definition rule stored in the storage unit; and
a monitoring unit, configured to receive an L2C message through the L2C connection, wherein the received L2C message carries a monitoring result and to perform keep-alive monitoring on the subscriber session group according to the monitoring result carried in the received L2C message.

9. The IP edge device according to claim 8, wherein the monitoring unit is further configured to perform keep-alive monitoring on each subscriber session in the subscriber session group.

## Patentansprüche

1. Verfahren zur Keep-Alive-Überwachung auf Teilnehmersitzungen, umfassend:
Definieren (S21) von mindestens zwei Teilnehmersitzungen auf mindestens einer physischen Leitung zwischen einem Zugangsknoten AN und einem eines Benutzergeräts UE, Kundenstandortgeräts CPE und Wohnungs-Gateways RG als eine Teilnehmersitzungsgruppe, wobei das RG das UE oder das CPE mit dem AN koppelt und wobei die Teilnehmersitzung eine Sitzung ist, die zwischen einer Internetprotokoll- bzw. IP-Edge-Einrichtung und dem UE oder dem CPE hergestellt wird;
Binden (S22) der Teilnehmersitzungsgruppe an eine Layer-2-Control- bzw. L2C-Verbindung zwischen einer IP-Edge-Einrichtung und dem AN; und Binden (S22) der physischen Leitung an die L2C-Verbindung;
Durchführen (S23) von Keep-Alive-Überwachung auf der Teilnehmersitzungsgruppe durch den AN durch Ausführen einer Schleifenprüfung der Operations, Administration and Maintenance OAM an der physischen Leitung oder durch Detektieren eines Bitübertragungsschichtstatus oder Sicherungsschichtsstatus der physischen Leitung und Transferieren eines Überwachungsergebnisses zu der IP-Edge-Einrichtung durch Verwendung einer L2C-Nachricht durch die L2C-Verbindung;
Durchführen (S24) von Keep-Alive-Überwachung auf der Teilnehmersitzungsgruppe durch die IP-Edge-Einrichtung gemäß dem in der empfangenen L2C-Nachricht geführten Überwachungsergebnis.

2. Verfahren nach Anspruch 1, wobei die IP-Edge-Einrichtung Keep-Alive-Überwachung auf jeder Teilnehmersitzung in der Teilnehmersitzungsgruppe durchführt.

3. Verfahren nach Anspruch 2, wobei die IP-Edge-Einrichtung eine Keep-Alive-Überwachungsperiode für die Teilnehmersitzungsgruppe konfiguriert und die IP-Edge-Einrichtung eine Keep-Alive-Überwachungsperiode für jede Teilnehmersitzung in der Teilnehmersitzungsgruppe konfiguriert.

4. Verfahren nach Anspruch 1, wobei, wenn bestimmt wird, dass die Teilnehmersitzungsgruppe abnorm ist, von allen Teilnehmersitzungen in der Teilnehmersitzungsgruppe belegte Netzbetriebsmittel freigegeben werden.

5. Verfahren nach Anspruch 4, wobei das Freigeben der von allen Teilnehmersitzungen in der Teilnehmersitzungsgruppe belegten Netzbetriebsmittel Folgendes umfasst:
Erzeugen einer Vergebührungsendenachricht durch die IP-Edge-Einrichtung und Senden der Vergebührungsendenachricht zu einem Server für Authentication, Authorization and Accounting AAA; Empfangen der Vergebührungsendenachricht durch den AAA-Server und Stoppen der Vergebührung für alle Teilnehmersitzungen in der Teilnehmersitzungsgruppe;
Erzeugen einer Freigabenachricht des Dynamic Host Control Protocol DHCP durch die IP-Edge-Einrichtung und Senden der DHCP-Freigabenachricht zu einem DHCP-Server; Empfangen der DHCP-Freigabenachricht durch den DHCP-Server und Freigeben aller von der Teilnehmersitzungsgruppe belegten IP-Adressen; und
Beenden aller Teilnehmersitzungen in der Teilnehmersitzungsgruppe durch die IP-Edge-Einrichtung.

6. Verfahren nach Anspruch 5, wobei das Freigeben der von allen Teilnehmersitzungen in der Teilnehmersitzungsgruppe belegten Netzbetriebsmittel Folgendes umfasst:
Freigeben aller Bindungen zwischen IP-Adressen und Ports in der Teilnehmersitzungsgruppe durch den AN.

7. System zum Durchführen von Keep-Alive-Überwachung auf Teilnehmersitzungen, umfassend:
eines eines Benutzergeräts UE, Kundenstandortgeräts CPE und Wohungs-Gateways RG, einen Zugangsknoten AN und eine IP-Edge-Einrichtung, wobei der AN dafür ausgelegt ist, Keep-Alive-Überwachung auf der Teilnehmersitzungsgruppe durchzuführen, indem eine Schleifenprüfung der Operations, Administration and Mainetance OAM auf der physischen Leitung ausgeführt wird oder durch Detektieren eines Bitübertragungsschichtstatus oder Sicherungsschichtstatus der physischen Leitung; und ein Überwachungsergebnis durch Verwendung einer L2C-Nachricht durch die L2C-Verbindung zu der IP-Edge-Einrichtung zu transferieren;
die IP-Edge-Einrichtung dafür ausgelegt ist, eine voreingestellte Teilnehmersitzungsgruppen-Definitionsregel zum Definieren von mindestens zwei Teilnehmersitzungen auf mindestens einer physischen Leitung zwischen dem AN und einem des UE, CPE und RG als eine Teilnehmersitzungsgruppe zu speichern; wobei das RG das UE oder das CPE mit dem AN koppelt und wobei die Teilnehmersitzung eine Sitzung ist, die zwischen einer Internetprotokoll- bzw. IP-Edge-Einrichtung und einem des UE und des CPE hergestellt wird; und die Teilnehmersitzungsgruppe an eine Layer-2-Control- bzw. L2C-Verbindung zwischen der IP-Edge-Einrichtung und dem AN zu binden; die physische Leitung an die L2C-Verbindung zu binden und Keep-Alive-Überwachung auf der Teilnehmersitzungsgruppe gemäß dem in der empfangenen L2C-Nachricht geführten Überwachungsergebnis durchzuführen.

8. IP-Edge-Einrichtung, umfassend:
eine Speichereinheit, die dafür ausgelegt ist, eine voreingstellte Teilnehmersitzungsgruppen-Definitionsregel zum Definieren von mindestens zwei Teilnehmersitzungen auf mindestens einer physischen Leitung zwischen einem Zugangsknoten AN und einem eines Benutzergeräts UE, Kundenstandortgeräts CPE und Wohnungs-Gateways RG als eine Teilnehmersitzungsgruppe zu speichern; wobei das RG das UE oder das CPE mit dem AN koppelt und wobei die Teilnehmersitzung eine Sitzung ist, die zwischen einer Internetprotokoll- bzw. IP-Edge-Einrichtung und dem UE oder dem CPE hergestellt wird;
eine Bindeeinheit, die dafür ausgelegt ist, die Teilnehmersitzungsgruppe an eine Layer-2-Control- bzw. L2C-Verbindung zwischen der IP-Edge-Einrichtung und dem AN zu binden, die physische Leitung an die L2C-Verbindung gemäß der in der Speichereinheit gespeicherten Teilnehmersitzungsgruppen-Definitionsregel zu binden; und
eine Überwachungseinheit, die dafür ausgelegt ist, eine L2C-Nachricht durch die L2C-Verbindung zu empfangen, wobei die empfangene L2C-Nachricht ein Überwachungsergebnis führt, und Keep-Alive-Überwachung auf der Teilnehmersitzungsgruppe gemäß dem in der empfangenen L2C-Nachricht geführten Überwachungsergebnis durchzuführen.

9. IP-Edge-Einrichtung nach Anspruch 8, wobei die Überwachungseinheit ferner dafür ausgelegt ist, Keep-Alive-Überwachung auf jeder Teilnehmersitzung in der Teilnehmersitzungsgruppe durchzuführen.

## Revendications

1. Procédé de surveillance de permanence de liaison sur des sessions d'abonnés, comprenant :
la définition (S21) d'au moins deux sessions d'abonnés sur au moins une ligne physique entre un noeud d'accès, AN, et l'un d'un équipement d'utilisateur, UE, d'un équipement d'abonné, CPE, et d'une passerelle résidentielle, RG, en tant que groupe de sessions d'abonnés, ladite RG couplant ledit UE ou ledit CPE audit AN, et la session d'abonné étant une session établie entre un dispositif limitrophe à Protocole Internet, IP, et l'un de l'UE et du CPE ;
la liaison (S22) du groupe de sessions d'abonnés à une connexion de commande de Couche 2, L2C, entre un dispositif limitrophe IP et l'AN ; et la liaison (S22) de la ligne physique à la connexion L2C ;
l'exécution (S23), par l'AN, d'une surveillance de permanence de liaison sur le groupe de sessions d'abonnés en exécutant un essai de boucle d'Opérations, Administration et Maintenance, OAM, sur la ligne physique ou en détectant un état de couche physique ou un état de couche de liaison de la ligne physique, et le transfert d'un résultat de surveillance au dispositif limitrophe IP en utilisant un message L2C par le biais de la connexion L2C ;
l'exécution (S24), par le dispositif limitrophe IP, de la surveillance de permanence de liaison sur le groupe de sessions d'abonnés en fonction du résultat de surveillance inclus dans le message L2C reçu.

2. Procédé selon la revendication 1, dans lequel le dispositif limitrophe IP exécute la surveillance de permanence de liaison sur chaque session d'abonné dans le groupe de sessions d'abonnés.

3. Procédé selon la revendication 2, dans lequel le dispositif limitrophe IP configure une période de surveillance de permanence de liaison pour le groupe de sessions d'abonnés, et le dispositif limitrophe IP configure une période de surveillance de permanence de liaison pour chaque session d'abonné dans le groupe de sessions d'abonnés.

4. Procédé selon la revendication 1, dans lequel quand il est déterminé que le groupe de sessions d'abonnés est anormal, les ressources de réseau occupées par toutes les sessions d'abonnés dans le groupe de sessions d'abonnés sont libérées.

5. Procédé selon la revendication 4, dans lequel la libération des ressources de réseau occupées par toutes les sessions d'abonnés dans le groupe de sessions d'abonnés comprend :
la génération, par le dispositif limitrophe IP, d'un message de fin de facturation, et l'envoi du message de fin de facturation à un serveur d'authentification, autorisation et comptabilisation, AAA ; la réception, par le serveur AAA, du message de fin de facturation, et l'arrêt de la facturation pour toutes les sessions d'abonnés dans le groupe de sessions d'abonnés ;
la génération, par le dispositif limitrophe IP, d'un message de libération selon le Protocole de Contrôle d'Hôte Dynamique, DHCP, et l'envoi du message de libération DHCP à un serveur DHCP ; la réception, par le serveur DHCP, du message de libération DHCP, et la libération de toutes les adresses IP occupées par le groupe de sessions d'abonnés ; et
l'arrêt, par le dispositif limitrophe IP, de toutes les sessions d'abonnés dans le groupe de sessions d'abonnés.

6. Procédé selon la revendication 5, dans lequel la libération des ressources de réseau occupées par toutes les sessions d'abonnés dans le groupe de sessions d'abonnés comprend : la libération, par l'AN, de toutes les liaisons entre les adresses et ports IP dans le groupe de sessions d'abonnés.

7. Système d'exécution d'une surveillance de permanence de liaison sur des sessions d'abonnés, comprenant :
l'un d'un équipement d'utilisateur, UE, d'un équipement d'abonné, CPE, et d'une passerelle résidentielle, RG, d'un noeud d'accès, AN et d'un dispositif limitrophe IP, dans lequel
l'AN est configuré pour exécuter une surveillance de permanence de liaison sur le groupe de sessions d'abonnés en exécutant un essai de boucle d'Opérations, Administration et Maintenance, OAM, sur la ligne physique ou en détectant un état de couche physique ou un état de couche de liaison de la ligne physique, et transférer un résultat de surveillance au dispositif limitrophe IP en utilisant un message L2C par le biais de la connexion L2C ;
le dispositif limitrophe IP est configuré pour mémoriser une règle de définition de groupe de sessions d'abonnés préétablie afin de définir au moins deux sessions d'abonnés sur au moins une ligne physique entre l'AN et l'un de l'UE, du CPE et de la RG en tant que groupe de sessions d'abonnés, ladite RG couplant ledit UE ou ledit CPE audit AN, et la session d'abonné étant une session établie entre un dispositif limitrophe à Protocole Internet, IP, et l'un de l'UE et du CPE ; et lier le groupe de sessions d'abonnés à une connexion de commande de Couche 2, L2C, entre le dispositif limitrophe IP et l'AN ; lier la ligne physique à la connexion L2C et exécuter la surveillance de permanence de liaison sur le groupe de sessions d'abonnés en fonction du résultat de surveillance inclus dans le message L2C reçu.

8. Dispositif limitrophe IP, comprenant :
une unité de mémorisation, configurée pour mémoriser une règle de définition de groupe de sessions d'abonnés préétablie afin de définir au moins deux sessions d'abonnés sur au moins une ligne physique entre un noeud d'accès, AN, et l'un d'un équipement d'utilisateur, UE, d'un équipement d'abonné, CPE, et d'une passerelle résidentielle, RG, en tant que groupe de sessions d'abonnés ; ladite RG couplant ledit UE ou ledit CPE audit AN, et la session d'abonné étant une session établie entre un dispositif limitrophe à Protocole Internet, IP, et l'un de l'UE et du CPE ;
une unité de liaison, configurée pour lier le groupe de sessions d'abonnés à une connexion de commande de Couche 2, L2C, entre le dispositif limitrophe IP et l'AN, lier la ligne physique à la connexion L2C en fonction de la règle de définition de groupe de sessions d'abonnés mémorisée dans l'unité de mémorisation ; et
une unité de surveillance, configurée pour recevoir un message L2C par le biais de la connexion L2C ; le message L2C reçu incluant un résultat de surveillance, et exécuter la surveillance de permanence de liaison sur le groupe de sessions d'abonnés en fonction du résultat de surveillance inclus dans le message L2C reçu..

9. Dispositif limitrophe IP selon la revendication 8, dans lequel l'unité de surveillance est configurée en outre pour exécuter la surveillance de permanence de liaison sur chaque session d'abonné dans le groupe de sessions d'abonnés.
